# EUROPEAN PATENT APPLICATION

(11) **EP 2 560 121 A1**
(43) Date of publication of application: **20.02.2013**
(21) Application number: 12190160.7
(22) Date of filing: 07.04.2008
(51) Int. Cl.: G06F 21/00

(54) **Communication terminal device, communication device, electronic card, method for a communication terminal device and method for a communication device for providing a verification**

(30) Priority: 05.04.2007 US 910249 P; 05.04.2007 DE 102007016538
(62) Divisional of application: 08735898.2
(71) Applicant: Intel Mobile Communications GmbH, 85579 Neubiberg (DE)
(72) Inventor: Luft, Achim, 38118 Braunschweig (DE); Schmidt, Andreas, 38124 Braunschweig (DE); Schwagmann, Norbert, 38102 Braunschweig (DE)
(74) Representative: Viering, Jentschura & Partner

(57) **Abstract**

A communication terminal device for providing a certificate may include an application, configured to receive a first message from a requesting communication device, wherein the first message includes a request for a verification and a request for information describing the user. The application is further configured to generate a response message for the requesting communication device, wherein the response message includes the verification including a response to the request, wherein the verification is digitally signed using a secret key of a trusted entity.

## Description

### Technical Field

Embodiments relate generally to a communication terminal device, a communication device, an electronic card, a method for a communication terminal device and a method for a communication device for providing a verification.

### Background

A use of a communication terminal device such as e.g. a mobile radio device for effecting a verification of person-related data is desired.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows an arrangement of a communication terminal device and a communication device for transmitting messages in accordance with an embodiment;
FIG. 2A shows a communication terminal device in accordance with an embodiment, the communication terminal device generating a verification message;
FIG. 2B shows a communication device in accordance with an embodiment, the communication device requesting a verification message;
FIG. 3 shows a message flow diagram with the messages exchanged between the involved entities in accordance with an embodiment;
FIG. 4 shows a flow diagram of a method for generating a verification message request message in accordance with an embodiment;
FIG. 5 shows a flow diagram of a method for checking the digital signature of the communication device requesting the verification message in accordance with an embodiment;
FIG. 6 shows a flow diagram of a method for authenticating the user in accordance with an embodiment;
FIG. 7 shows a flow diagram of a method for generating the requested verification message in accordance with an embodiment;
FIG. 8 shows a flow diagram of a method for checking the digital signature of the communication terminal device and for checking the requested verification by means of the communication device in accordance with an embodiment;
FIG. 9 shows a message for requesting a verification in accordance with an embodiment;
FIG. 10 shows a message for requesting an acknowledgement by the user in accordance with an embodiment;
FIG. 11 shows a message including the user response of the acknowledgment request in accordance with an embodiment;
FIG. 12 shows a message which includes the verification generated by the communication terminal device in accordance with an embodiment;
FIG. 13A shows a method for providing a digital verification with respect to a communication terminal device in accordance with an embodiment;
FIG. 13B shows a method for providing a digital verification with respect to a communication device in accordance with an embodiment;
FIG. 14 shows the structure of a digital certificate in accordance with the ITU-T X.509 standard; and
FIG. 15 shows a flow diagram with respect to digital signatures.

### Description

In the context of this description, the terms "connected" and "coupled" are intended to describe a direct or indirect connection or a direct or indirect coupling, respectively.

A mobile radio terminal device tends to become a universal tool due to its high market penetration and its permanent presence with the subscribers. By way of example, already today, many mobile radio terminal devices are used as personal digital assistants and the mobile radio terminal device is used to manage addresses, dates, notes, and so on. Also the field eCommerce and the possibilities associated therewith to use the mobile radio terminal device like a cash card are presently tested at many places or are already in use in order to pay e.g. tickets for busses or trains.

Therefore, it would be desirable if a further day-to-day task may be solved in an improved manner by means of a mobile radio terminal device. This task is the effecting of a verification. The spectrum of the applications reaches via the age verification for acquiring alcohol, games, cigarettes or for the access to amusement arcades, video stores, via the verification of the gender for internet fora to the digital authentication e.g. at video store machines.

In this case, one can distinguish between two types of a verification, namely as to whether the verification should be carried out toward a person or an entity to which the verifier already has a business relationship and who or which already has a data record about the verifier, or as to whether it is a verification toward a person or entity, to whom or which the verifier is totally unknown. In the second type of a verification, a third person or entity should be involved which is trusted by both other parties.

Also in this case there is a differentiation of the both types of a verification:

In case it is a verification toward a person or entity to whom or which the verifier already has a business relationship, then, the verification is usually carried out using a document, which has been issued from the entity which requests the verification. In this case, e.g. a video store provided the customer with a customer identification card, by means of which the customer can verify his or her membership in the future. A link between the customer identification card and the data record compiled in the video store provides for the provision of the required data, e.g. as to whether the age of the customer authorizes the customer to rent a specific movie. Regularly, a customer identification card is provided with additional features, which make an abuse difficult. By way of example, an image of the customer may be provided on the card or the input of a PIN (personal identification number) is carried out in addition to the presentation of the customer identification card, which is compared with the customer data record. These measures should prevent that someone impersonates himself as someone else by means of a found or stolen customer identification card.

Thus, a lot of different customer identification cards accumulate with the customer. These may be associated with different PINs. The customer is in the situation that he has to either carry a plurality of plastic cards with him or to keep the respective correct card.

The security of the different customer cards vary a lot. In many cases, the security level is low due to cost reasons und the customer cards usually do not include cryptographic protection mechanisms and often also no biometric information.

The cards are physically accessible and can thus be stolen or get lost otherwise. As a typical example, the washing of the customer cards having been forgotten in clothes together with the clothes should be mentioned.

The cards can be inspected by third persons in a very simple manner. The cards often, in addition to the name, contain additional data such as e.g. account number with a customer card of a bank. In case a whole identification card briefcase gets lost, a lot of information about its owner is divulged, which make the theft of identification easier.

Such cards are also subject to signs of wear.

A data transmission between card and customer data system may be implemented by means of additional methods (e.g. using magnetic stripes). These methods usually are not contact-free, which results in that the cards are subject to additional wear and that the card is given out of the hand. The communication is often not encrypted due to the lack of a data processing circuit on the card and therefore, the communication is susceptible to manipulation.

Furthermore, material is needed for the manufacturing of the cards.

For the first compilation of a customer data record as described above as well as for each verification toward a person or an entity to whom or which (by that time) does not have a business relationship, a verification, which has been issued by a trusted entity, becomes necessary. In the example of the video store, usually a personal identity card is requested for the compilation of a customer data record. This verification issued from the government includes name, place of living, date of birth, place of birth, and some biometric information such as e.g. passport photograph, size and color of the eyes.

It is desired to avoid the divulgence of much information which would not be necessary for the actual verification. There does not exist the necessity that the collector in a shop, when selling cigarettes, when only an age verification (e.g. older than 16 years) is required, comes to know the name, the date of birth und the address of the buyer.

The operation over a distance (e.g. the internet) and the avoiding of the participation of a human is desired compared to the conventional two types of carrying out a verification, in order to achieve a substantially less effort and a complete automation.

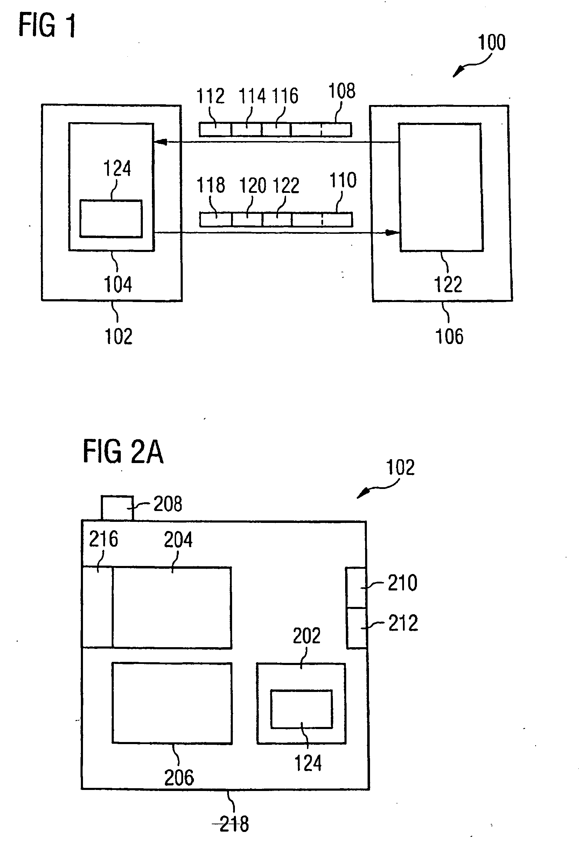

FIG. 1 shows an arrangement 100 in accordance with an embodiment, which includes a communication terminal device 102 (in other embodiments, any number of communication terminal devices) and a communication device 106 (in other embodiments, any number of communication devices). The communication device 106 may be integrated e.g. in an automat or in another device. The communication device 106 in accordance with this embodiment includes a message generating circuit 122 for generating a message 108, which is sent to the communication terminal device 102. The message 108 that is received by the communication terminal device 102 is forwarded to and evaluated by an application 124, which is executed in a processing unit 104, e.g. a microprocessor or another type of a programmable logic. The processing unit 104 may be a fixed integral part of the communication terminal device 102 or it may be a removable card 202 such as e.g. a SIM card of a mobile radio terminal device 218, as shown as an example in FIG. 2A.

In case the preconditions, which will be outlined further below, are fulfilled, the application 124 in the processor unit 104, which includes at least one processor, generates a response message 110, which in turn is sent to the communication device 106 and which will be evaluated by the local processor unit 122 there.

The communication device 106 may e.g. be part of an automat, which requires a confirmed information about a personal characteristic of a user for an action, in order to obtain the permission to execute this action. By way example, the automat is a cigarette automat which requires the verification of the age of the person who wants to buy a packet cigarettes at this cigarette automat. The communication device 106 sends a request about a personal characteristic by means of a request message 108 to the communication terminal device 102.

In accordance with an embodiment, the verification is sent from the communication terminal device 102 to the communication device 106 as a digital verification message including the response to the request in the response message.

In this description, a digital verification message may e.g. be understood as being structured data, which confirm and verify the user as well as further characteristics of a public key. In an embodiment, the digital verification message includes a digital certificate. By means of a digital certificate, users of an asymmetric crypto system such as e.g. RSA (the abbreviation RSA stands for the inventors Ronald L. Rivest, Adi Shamir and Leonard Adleman) can assign the public key to an identity (e.g. of a person or an IT system) and can determine its field of application. Thus, the digital certificate enables the protection of confidentiality, authenticity and integrity of data by means of the correct application of the public key. In accordance with an embodiment, a digital certificate includes the public key of a user and a digital signature over the public key.

In this way, it is e.g. ensured that the age of a person is determined by the device issuing the verification message - e.g. the application in the processor device 104 in the communication terminal device 102 - correctly. In accordance with an embodiment, a digital signature is used in the verification message in order to ensure that the verification message and, if applicable, the certificate for e.g. the age verification contained therein arrives at the receiving communication device 106 in an unaltered manner and actually come from the corresponding user, or, depending on which result is contained in the verification message (e.g. positive or negative) and the determination that the received message is authentic, a corresponding reaction takes place at e.g. the automat. In other words, this means that the message is actually the response to the request for the verification message and that it has not been altered and that the sender of the response including the verification message is actually the device that is authorized to do that, such as e.g. the application 124 in the processor unit 104 in the communication terminal device 102.

FIG. 1 furthermore shows the verification message request message 108 and the response message 110. The messages include different portions, in FIG. 1 represented by the blocks 112, 114, 116, and 118, 120, 122, repectively, which will be described in more detail further below.

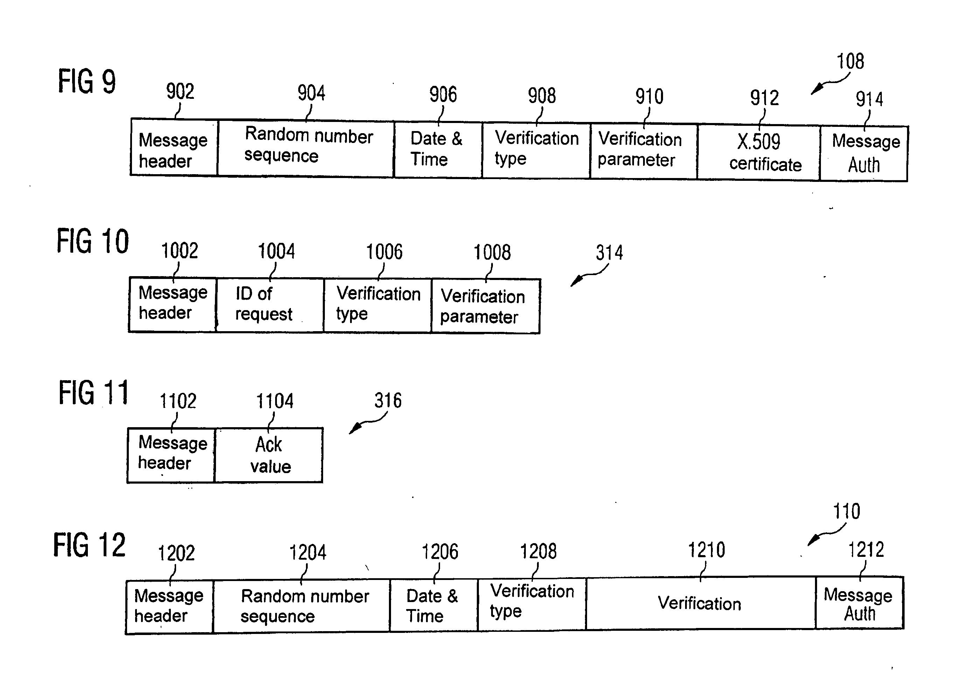

The communication device 106 sends in accordance with an embodiment a message 108, which includes a request 112 for a verification, to the communication terminal device 102. The blocks 112 to 122 of the messages 108 and 110 in FIG. 1 are to be understood merely in a symbolic way. Examples of possible formats of the messages will be described in detail in the further course of this description with reference to FIGS. 9 to 12.

In accordance with an embodiment, the message 108 optionally includes a certificate of the verification requester including e.g. a first digital signature.

Herein, a digital signature may be understood as a being a cryptographic method or a digit sequence generated by means of a cryptographic method, which has been generated by means of a so-called private key from the so-called hash value of a message in accordance with a specific encryption algorithm and which can be decrypted again using a so-called public key. The decrypted value can be compared with the hash value, which is generated out of the received message, in the receiver of the message. Thus, the sender of the message can be verified. Furthermore, the integrity of the message is determined. The application of the encryption algorithm is carried out in accordance with an embodiment in a hash function.

A hash function may be understood herein as being a function, which generates, for an input out of a usually large source set, an output out of an in general smaller target set, e.g. by generating a checksum. The checksums are used in order to detect changes at the data, which may occur due to technical parasitic inductions or intentional manipulation. However, also other algorithms may be used which generate e.g. a cross sum, a parity, a check digit, a modulo function or a cyclic redundancy check or e.g. work in accordance with the following conventional methods: Adler-32, hash table, Merkle's meta method or Salted hash. A use of a hash function, however, results in a higher level of security being ensured. The reason for this is e.g. that a hash function fulfills additional security requirements. By way of example, a hash function provides a lesser collision (two different texts should not result in the same hash value, if possible). Furthermore, a hash function ensures that no inference can be made on the initial data and that a guaranteed change of the hash value occurs in response to the slightest change of the basic data. Conventional hash algorithms in the cryptography which can be used in various embodiments, are e.g. MD2, MD4, MD5, SHA, RIPEMD-160, Tiger, HAVAL, or WHIRLPOOL.

The method of the digital signature will be described in more detail in the further description.

In accordance with an embodiment, the communication terminal device 102 includes an application 124, which is executed in the processor device 104. In accordance with an embodiment, the message 108 including the verification message request is received by the processor device 104 und is processed by its application 124. As will be described in detail further below, in accordance with an embodiment, the application 124 first checks the certificate of the verification requester (if present) and the first digital signature (if present) in order to ensure that the sender of the message is the communication device 106 authorized to do this and that the message has not been altered during the transmission. The request message 108 may include further fields, which may be checked in accordance with the embodiments described further below.

In accordance with another embodiment, after a successful check of the first digital signature, the request for the information is processed and the result of the processing is inserted into the response message 110 as a verification, which is generated by the application 124 in the processor device 104. The communication terminal device 102 then sends the response message 110 to the communication device 106.

In order to enable the communication device 106 to ensure that the response message 110 has actually been sent by the communication terminal device 102 and has been received unaltered, in accordance with an embodiment, the application 124 itself adds a second digital signature to the response message 110 before sending it.

FIG. 2A shows an embodiment of a communication terminal device 102, which is mobile, in FIG. 2A e.g. implemented as a mobile radio terminal device 218, having an antenna 208; a near-field communication interface 210; an optical interface 212; a man machine interface including a display 204, a keyboard 206 and a loudspeaker 216; a SIM card 202; and an application 124 implemented thereon. The communication terminal device 102 may in accordance with an embodiment include a data memory, in which the application 124 is stored, and a processor, by which the application 124 is executed.

The application 124 may also be realized at least partially in hardware.

In accordance with an embodiment, a SIM card may be inserted into the mobile communication terminal device 102, wherein the SIM card may include a SIM card memory, in which the application 124 is stored.

The application 124 may prompt the user of the communication terminal device 102, for which a verification should be generated in the form of a verification message, in accordance with an embodiment optically by means of the display 204 or acoustically by means of the loudspeaker 216, to confirm that the verification message should be generated and be transmitted to the communication device 106.

The messages 108,110 which are exchanged between the communication terminal device 102 and the communication device 106 can be transmitted via the data interface of a mobile radio communication standard such as e.g. GSM (Global System for Mobile Communications), UMTS (Universal Mobile Telecommunications System), FPLMTS (Future Public Land Mobile Telecommunication System), CDMA 2000 (Code Division Multiple Access 2000) or via a packet-oriented interface or an internet interface such as e.g. in accordance with GPRS (General Packet Radio Service) as part of GSM, or alternatively, using UMTS.

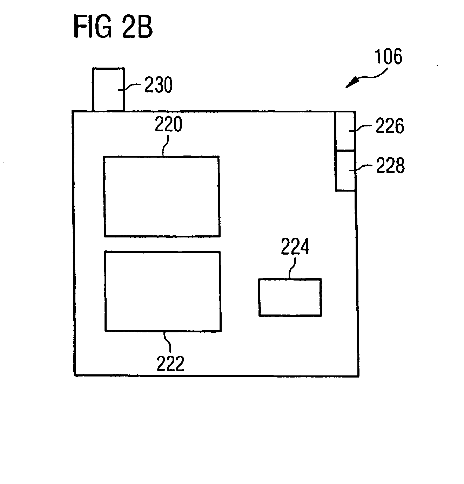

In accordance with a further embodiment, the communication terminal device 102 may also be a wireless communication terminal device 102, in which the messages are transmitted via an interface 210 of a near-field communication standard such as e.g. Bluetooth, a standard of a wireless communication system such as e.g. IEEE 802.11, WiMax (Worldwide Interoperability for Microwave Access), an optical data interface 212 such as e.g. IrDA (Infrared Data Association) or an optical scanner such as e.g. a barcode reader or a camera, or other wireless standards. The communication terminal device 102 may e.g. be a PDA (personal digital assistant), a portable computer or also a music player having digital communication capabilities or another portable electronic device, into which the functions required by the application 124 are implemented. In the case of an optical scanner, e.g. a barcode may be read in from a display 220 (see FIG. 2B) of the communication device 106.

Also a wireline interface via a data cable is provided in an alternative embodiment. In case it is a radio connection, the receiving and sending is carried out via an antenna 208, which may be integrated into the communication terminal device 102 or, alternatively, also be guided out of the communication terminal device 102.

In accordance with an embodiment, the application 124 may be updated via a secure transmission channel. By way of example, the data structure, the executable code or the data may be changed in a flexible manner. In this case, e.g. also the field of application may be changed, e.g. by means of an additional request for information or a change of the request. By way of example, in the example of the cigarette automat, in a simple manner, a possible change in law with respect to the minimum age for buying cigarettes may be accomodated. The secure transmission channel for updating of the application may be a wireline transmission channel or a wireless transmission channel. Furthermore, the secure transmission channel for updating the application may be a telecommunications transmission channel, e.g a wireline telecommunications transmission channel or a wireless telecommunications transmission channel.

The methods described herein in accordance with an embodiment serves e.g. for replacing a customer card by a digital solution and for effecting a verification toward an entity, to which by that time no business relationship has existed.

In case in the above embodiment, the communication terminal device 102 is a mobile radio terminal device 218, the verifications are carried out by means of this mobile radio terminal device 218.

The mobile radio terminal device 218 of a customer has in accordance with this embodiment an application 124 installed. This application 124 may be trusted, i.e. an entity demonstrably arranges for the existance of the application 124 and for it being unchanged. This entity could e.g. in case that the application 124 is arranged on the terminal, i.e. e.g. the mobile radio terminal device 218, itself, be the manufacturer of the mobile radio terminal device 218. Alternatively, the entity could also be the mobile radio network provider himself or herself. Illustratively, as will be described in more detail below, a trusted entity is provided, which digitally signs the verification. In the case of a mobile radio terminal device 218, the trusted entity could be the mobile radio network provider himself or herself and the verification could e.g. be digitally signed using the secret key of the mobile radio network provider, which may be stored e.g. in the SIM card of the user of the mobile radio terminal device 218.

The processor device 104 having a processor and a data memory for storing information and data executable by the processor of the processor device 104, which data form the application, in accordance with an embodiment may be arranged on the communication terminal device 102 itself, which can e.g. be the mobile radio terminal device 218.

In accordance with an embodiment, the application 124 may be arranged on an electronic card, which includes at least one data memory and/or one processor. In accordance with an embodiment, the processor is a programmable processor, e.g. a microcontroller. An example of such an electronic card is a SIM card (Subscriber Identity Module) 202 of a mobile radio network provider.

The SIM card 202 in the implementation of a so-called smartcard has e.g. the following characteristics:

- It includes a processing unit (e.g. a microcontroller).

- It is protected against a manipulation from external (in other words, external from the SIM card).

- The interface is usable only in a defined manner and after authorization.

- It represents, in contrast to a mobile radio terminal device having a possibly open operating system and interfaces for programming, a closed system processing data.

- It is person-related und remains intact after a change of the mobile radio terminal device, which also plays to the task to provide a person-related verification.

In the second mentioned case, the mobile radio network provider is the trusted entity, which can provide its services for third parties (such as e.g. the video store mentioned as an example).

Under these preconditions, the verification issuing entity thus gets the possibility to deposit a digital certificate, which has been generated by its own, into the application 124 of the trusted entity. Furthermore, this entity gets the possibility to authenticate itself toward the application 124 in the form of a digital certificate issued by the mobile radio network provider. This certificate in accordance with an embodiment replaces a conventional customer card. The trusted entity may also deposit information about the mobile radio subscriber by itself into the application 124, which information is suitable for the verification.

In accordance with an embodiment, a random number sequence 114 may additionally be inserted into the first message 108 sent by the communication device 106, wherein the random number sequence 114 may also be inserted into the response message 110. The insertion of a random number sequence 114 serves to prevent a so-called replay attack. Each request is different from previous requests due to the changing number sequence, so that a simple repeated transmitting of a previously generated response message 110 results in an error case.

In accordance with an embodiment, an encryption unit may be provided in the communication terminal device 102, which may e.g. encrypt the random number sequence e.g. using the public key of the verifier, such that the communication terminal device 102 can insert the encrypted random number sequence into the response message 110, thereby increasing the strength of the authentication.

Furthermore, in accordance with an embodiment, the date and/or the time 116 may be inserted into the response message 110 in order to avoid that a false verification has been generated by changing the internal clock.

In accordance with an embodiment, for authenticating the user of the communication terminal device 102, the communication device 106 may prompt for the input of a characteristic such as e.g. a PIN (personal identification number) from the user of the communication terminal device 102, which the user may input via the keyboard 206. This ensures that the user is the actual authorized user of the communication terminal device 102 or the mobile radio terminal device 218. However, also other methods such as e.g. biometric methods, such as e.g. finger print, scanning of face characteristics or of characteristics of the iris or voice recognition, may be used for authentication.

As the application 124 requests a confirmation from the user of the communication terminal device 102 that the communication terminal device 102 should generate a verification message including the response to the request and should send it to the communication device, the user keeps control over the process and over the question as to whether it should be transmitted.

The request, which should be answered by the generation of the verification message, could e.g. be information about personal characteristics of the user of the mobile radio terminal device 218 such as e.g. the age or as to whether a specific age is undershot or exceeded, a customer number or the gender, just to mention a few examples.

FIG. 2B shows an embodiment of a communication device 106 corresponding to the communication terminal device 102.

In accordance with this embodiment, the communication device 106 includes a processor device 224 which generates the request message 108 and sends it to the communication terminal device 102. The request message 108 includes at least a request for a verification and a first digital signature. The digital signature in the request message 108 makes sure that not anybody can request a verification. However, it should be mentioned that the first digital signature is optional. The request message 108 can also, as will be described further below with reference to FIG. 9, include further data, such as e.g. a random number, the current date and the time and a message header. In accordance with an embodiment, the request refers to information about the user of the communication terminal device 102.

In accordance with an embodiment, the communication device 106 may further insert an information about the type of the requested verification into the message.

In accordance with an embodiment, the processor device 104, in response to the sending of the request message 108, receives a response message 110 from the communication terminal device 102 and checks its content. The response message 110 in accordance with an embodiment includes e.g. a second digital signature, generated by the communication terminal device 102, the requested verification, the sent-back, possibly encrypted, random number sequence, date and time, and a message header. An example response message 110 will be described later with reference to FIG. 12.

In accordance with an embodiment, the communication device 106 also includes a man machine interface, e.g. having a display 220 and a mechanical or electronical input device such as e.g. one or a plurality of input knobs, a keyboard or a touch-sensitive display. The communication device 106 further includes one or a plurality of interfaces 226, 228 corresponding to the communication terminal device 102. These can correspondingly be one or a plurality of mobile radio communication interfaces, wireless communication interfaces, or optical communication interfaces. In case the messages are transmitted via a mobile radio connection, the communication device in accordance with an embodiment includes at least one antenna. In accordance with an embodiment, the processing unit 224 generates the request message 108, which is transmitted to the communication terminal device 102 via one of the interfaces and possibly the antenna 230. In the reverse direction, the response message 110 transmitted via possibly the antenna 230 and one of the interfaces 226, 228, is forwarded to the processing unit 224, which eventually evaluates the content of the response message 110 and triggers corresponding actions such as e.g. the ejection of a packet of cigarettes in the example of the cigarette automat.

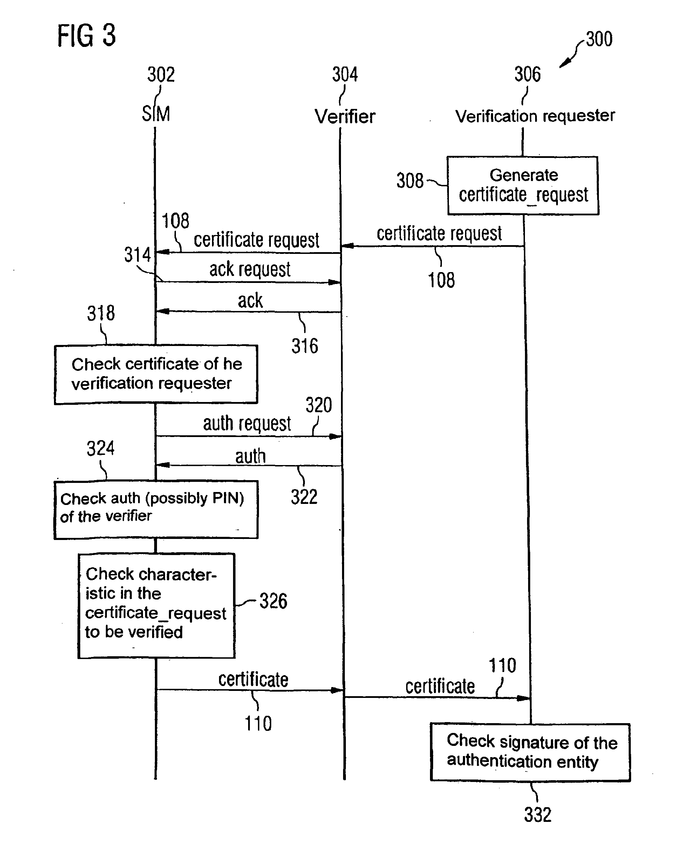

In the diagram 300 in FIG. 3 the following message flow between the entities in accordance with an embodiment is shown, when a verification generator such as e.g. a mobile radio subscriber wants to identify himself or herself toward an entity 306.

The messages which are transmitted between the entities 302, 304, 306, will be described in detail further below with reference to the FIG. 9 to FIG. 12.

1. In accordance with an embodiment, the entity 306 requesting a verification generates in 308 a verification message request message 108 and posts a request to the communication terminal device 102 of the mobile radio subscriber 304 by means of this verification message request message 108 in a digital way, either via near-field communication, e.g. Bluetooth, optical communication, e.g. via IrDA, or via another information transmitting system (e.g. Internet). At the communication terminal device 102, the verification message request message 108 will be forwarded to the SIM 302 shown in FIG. 3. In alternative embodiments, other transmission paths are provided such as e.g. an optical transmission, in which e.g. a barcode (e.g. Semacode) presented at the display of the verification requesting entity 306 is read, or a transmission via the mobile radio network itself.

In this case, by way of example, the following information may be included in the verification message request message 108:

- Certificate of the requesting entity 306;

- Binary coded type of the verification (e.g. matching of the customer number, "older than X years?", "male?";

- random number sequence.

2. The verification message request message 108 is forwarded to the application 124 in the SIM card 202 in accordance with this embodiment.

3. The mobile radio subscriber 304 confirms in accordance with this embodiment using the message "ack" 316 in response to a request "ack_request" 314 at his mobile radio terminal device 218 that he would like to provide this verification using his mobile radio terminal device 218 to the authorized entity 306.

4. In accordance with this embodiment, the certificate of the requesting entity 306 is checked in the application 124 and in case of a positive verification, the request contained in the verification message request message 108 will be further processed. In the negative case, an error message is output and the method is cancelled at this stage.

5. Further in accordance with this embodiment, the mobile radio subscriber now authenticates himself or herself toward the application 124. This may be carried out e.g. by means of the message pair "auth_request" 320 and "auth" 322 by means of inputting of the PIN selected by the user for the SIM card 202 and the subsequent checking 324. This serves to ensure that a verification cannot be carried out by a person, who illegitimately has come into the ownership of the mobile radio terminal device 218. It is to be noted that the authentication is optional.

6. The application 124 checks in 326 the characteristic to be verified. In case e.g. a verification is requested that the mobile radio subscriber 304 is 16 years old or older, a yes-or-no-response is generated from the stored data of birth and the current date.

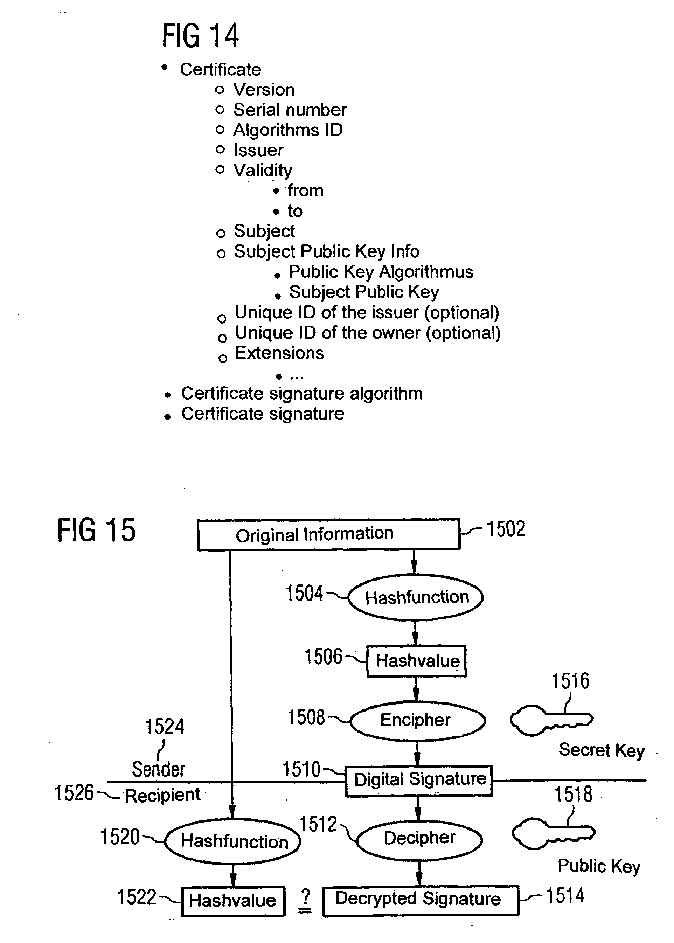

7. For the case that the verification is positive, the application composes a response, which includes the random number sequence 114 transmitted in the verification message request message "certificate_request" 108, the current date and the deposited or stored certificate or the response calculated in item 6., and digitally signs the same using a signature of the mobile radio network provider. The principle of the digital signature will be illustrated further below with reference to the FIG. 14 and FIG. 15. The thus generated response message 110, in FIG. 3 referred to as "certificate" message 110, is transmitted to the verification requesting entity 306. In case that in the above example the subscriber is not 16 years old or older, either no response is generated or in favour of an improved usability a negative response, namely a response that the characteristic to be verified is not fulfilled.

8. The requesting entity 306 checks in accordance with a development of this embodiment using a public key provided by the mobile radio network provider, as to whether the digital signature of the response message 110 of the application 124 is valid. In case it is valid, the verification may be trusted. In case that the signature cannot be verified, this results in an error message. The process may possibly be repeated, if desired.

The check of the certificate could also be carried out before the ack_request message 314. This would e.g. have the effect that the verification generator 304 is not asked for authorization in the case of an error. On the other hand, the checking of the certificate needs computer power so that a DoS attack (Denial of Service) could occur using often transmitted "certificate_request" messages 108. Since the authorization could be very much automated using subscriber preferences (without the participation of the verifier 304), in one embodiment, the order as outlined here is provided.

The message used in accordance with the embodiments will be described in more detail below with reference to the FIG. 9 to FIG. 12.

In the following, the processes shown in the message flow diagram will be illustrated in detail:

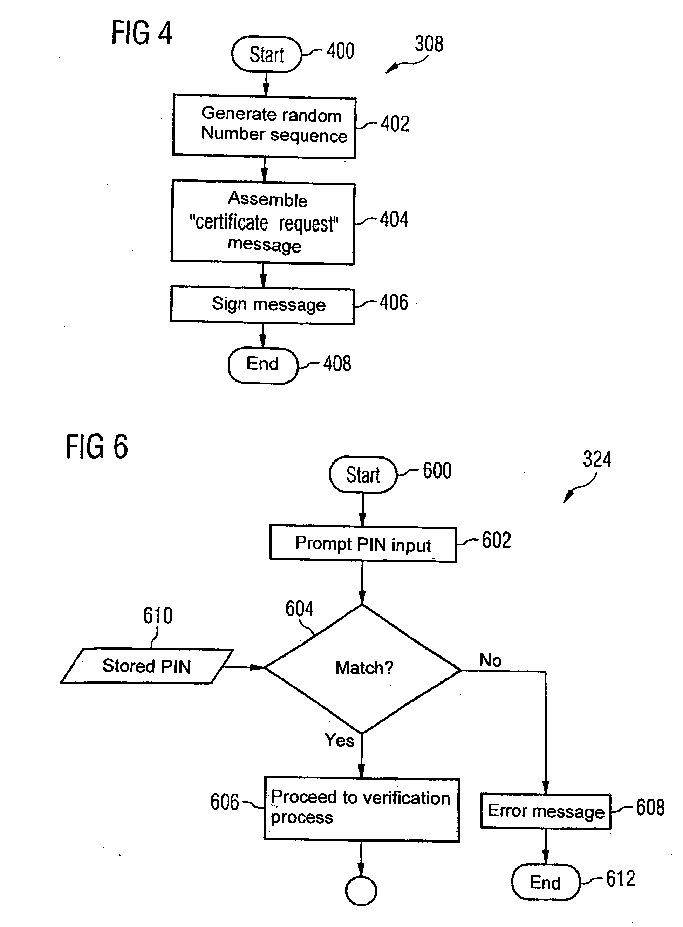

FIG. 4 shows a flow diagram in accordance with an embodiment for generating 308 of the verification message request message (certificate_request message) 108. At first, after having started the process in 400, in 402, a random number sequence is generated, and then, in 404, the actual request, which includes e.g. the request for an age verification, is inserted into the verification message request message 108. Eventually, the message is digitally signed in 406. This may be carried out e.g. using a well known method as mentioned above. Then, the process is completed in 408.

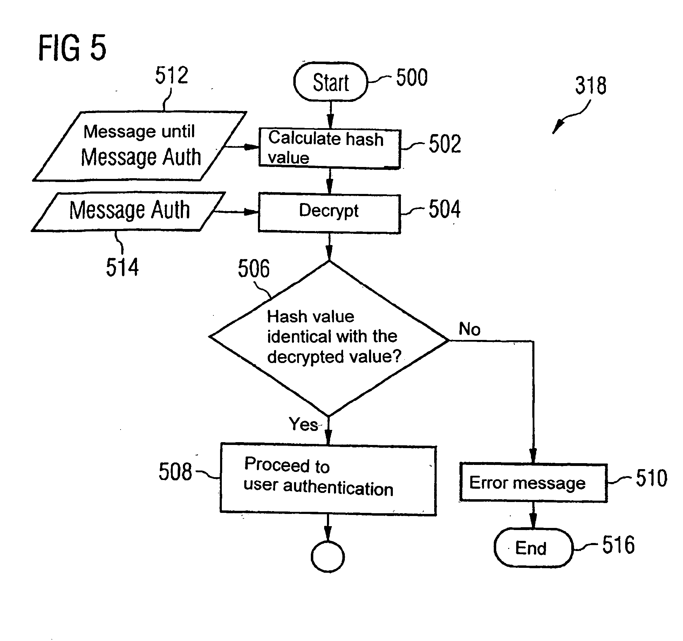

FIG. 5 shows in a flow diagram in accordance with an embodiment the checking 318 of the certificate of the verification requester 306 by means of the application 124 in the processor device 104 (e.g. SIM card 202) of the communication terminal device 102 (e.g. the mobile radio terminal device 218). In doing this, after having started the process in 500, in 502, the hash value is calculated over the received message 108 until (exclusive) the message field "Message Authentication" 914, which will be described in more detail below in FIG. 9 (in FIG. 5 denoted with 512). In 504, the hash value, which has been transmitted in the message field "Message Authentication" 914 (in FIG. 5 denoted with 514) in an encrypted fashion, will be decrypted. The both values are compared with each other in 506. In case of a positive matching ("Yes" in 506) it is proceeded in 508 for user authentication; in case of a negative matching ("No" in 506), an error message is generated in 510 and the process is cancelled in 516.

FIG. 6 shows a flow diagram of the user authentication 324 in accordance with an embodiment. After having started the process in 600, in 602, the user is prompted for inputting a PIN. In 604, the input PIN is compared with the stored PIN 610. In case of a positive matching ("Yes" in 604) it is further proceeded in 606 to the verification process; in case of a negative matching ("No" in 604), an error message is generated in 608 and the process is cancelled in 612. However, also other methods such as e.g. biometric methods for authentication could be used.

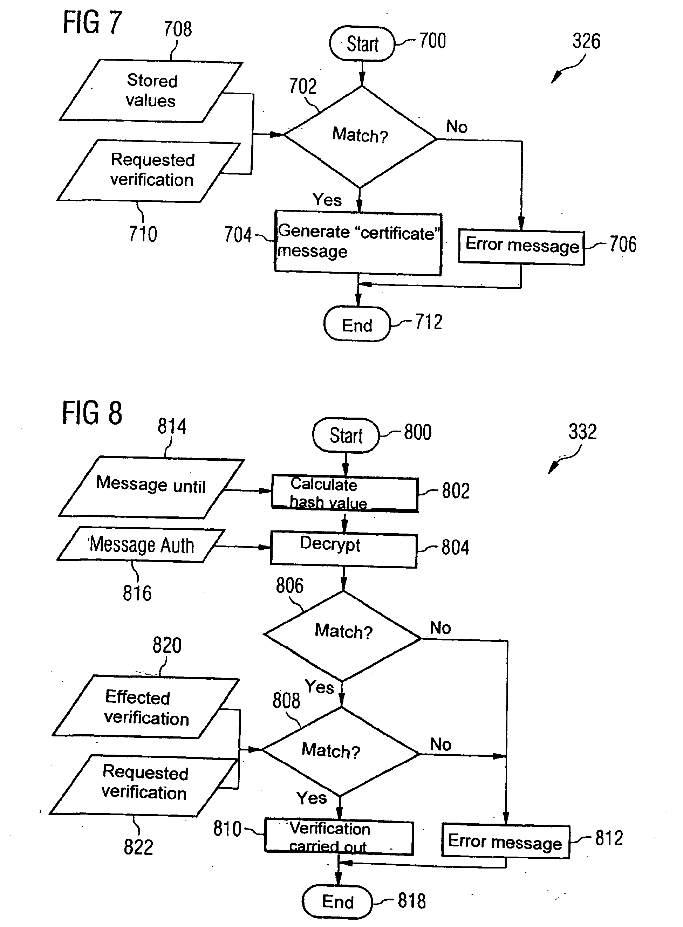

FIG. 7 shows a flow diagram for checking the characteristic to be verified in the communication terminal device 102 in accordance with an embodiment. After having started the process in 700, in 702, the stored values (in FIG. 7 denoted with 708) are compared with the requested verification (in FIG. 7 denoted with 710). This is e.g. in the coninuation of the example of the age verification the actual check as to whether the user has the minimum age or not. In case of a positive result ("Yes" in 702), the message "certificate" 110 is generated in 704, which is sent to the verification requesting entity 306. In case of a negative result ("No" in 702), an error message is generated in 706. Then, the process is completed in 712.

FIG. 8 shows a flow diagram for checking 332 the "certificate" message 110 in accordance with an embodiment. Similar to the proceedings for the "certificate request" message 108, after having started the process in 800, in 802, at first, the hash value is calculated over the message 110, which will be illustrated in detail further below in FIG. 12, until (exclusive) the field "Message Authentication" 1212 (see FIG. 12) (in FIG. 8 denoted with 814), and, in 804, the value in the message field "Message Authentication" 1212 (in FIG. 8 denoted with 814) transmitted in encrypted fashion, is decrypted. These two values are compared with each other in 806. In case of a negative result ("No" in 806), an error message is generated in 812 and the process is cancelled in 818. In case the comparison is positive ("Yes" in 806), in 808, the carried out verification (in FIG. 8 denoted with 820) is compared with the requested verification (in FIG. 8 denoted with 822). At this point, e.g. the verification requesting entity 306 thus checks as to whether the age verification has been effected. In case of a positive result ("Yes" in 808), the verification requesting entity 306 may execute further actions by means of a message or a signal, such as e.g. the output of the message or in the example of the cigarette automat the ejection of a packet cigarettes. In other words, in case of a positive result ("Yes" in 808), the verification has been effected in 810. In case of a negative result ("No" in 808), an error message is generated in 812 and the process is completed in 818.

In the following, the messages in accordance with embodiments will be described in more detail:

FIG. 9 shows the "certificate_request" message 108, also referred to as verification message request message 108, which may include in accordance with an embodiment:

### - Message header 902:

The message header 902 includes in accordance with an embodiment e.g. the addressee, sender, message type (in this case the message type "certificate_request") and optionally a "Message ID" (unique identification of the message). For this purpose, also a random number sequence (RAND) may be used. By introducing a "Message ID" into the message header 902, the "Message ID", which is smaller compared with the random number sequence, may be processed easier and therefore faster.

### - Random number sequence RAND 904:

The random number sequence 904 denotes the andom number sequence, which is used for the assigning between a verification message request message (also referred to as "certificate_request" message) 108 and a "certificate" message 110 and for the authentication of the verifier 304.

### - Date & time 906:

This field is optional in this message 108. An effect of the introduction of this field may be seen in that errors, which could occur due to deviations between the clocks of the verification requester 306 and the verifier 304, are avoided. Eventually, for the calculation of the verification, date and time of the verification requester 306 should be used. In case these values would be transmitted and taken over for the calculation, thus, a possible error source may be eliminated. A further effect is that this makes a replay attack, in which an attacker replays a previously intercepted and recorded message to a verifier 304, more difficult.

### - Verification type 908:

This message field includes the type of the verification that is requested. It is e.g. determined as to whether it is a previously deposited verification (already existing business relationship) or an anonymously dynamically generated verification.

### - Verification parameter 910:

The verification parameters 910 are to be interpreted in dependency from the field "Verification type" 908. This field includes the parameters associated with the requested verification depending on the type of the requested verification such as e.g. the minimum age to be verified.

### - X.509 certificate 912:

This is the certificate of the verification requester 306. This could e.g. follow the ITU-X.509 standard or may otherwise exist in another predefined structure. The X.509 standard will be described further below.

### - Message-Auth 914:

This field includes the digital signature of the verification message request message 108 by the verification requester 306. This field ensures the integrity of the verification message request message 108. If a field of the message is changed, the "Message-Auth" field 914 will no longer match to the rest of the verification message request message 108 and the verification message request message 108 may be discarded without further processing.

The message "certificate_request" 108 could be binary coded and/or compressed in accordance with an embodiment for minimizing the bandwidth.

The verification message request message 108 may in accordance with further embodiments also include more or less fields than those which are listed in FIG. 9 as an example.

FIG. 10 shows the "ack_request" message 314, which includes the following fields in accordance with an embodiment:

### - Message header 1002:

The Message header 1002 includes in accordance with an embodiment at least the message type (in this case the message type "ack_request").

### - Message type 1004:

This message field includes the type of the verification, which is requested. As regards content, this is the entry transmitted in the "certificate_request" 108. It serves the verifier 304 to decide as to whether he or she wants to agree to this type of verification.

### - Verification parameter 1008:

The parameters of the requested verification are also provided for the authorization by the verifier 304. As regards content, these are the entries transmitted in the "certificate_request" 108.

The message "ack_request" 314 could be binary coded and/or compressed in accordance with an embodiment for minimizing the bandwidth.

Also the message ack_request 314 may in accordance with further embodiments include more or less fields than those that are listed in FIG. 10 as an example.

FIG. 11 shows the "ack" message 316, which in accordance with an embodiment includes the following fields:

### - Message header 1102:

The Message header 1102 includes in accordance with this embodiment at least the message type (in this case the message type "ack").

### - Ack value 1104:

This field gives in accordance with an embodiment the answer to the authorization request in the ack_request message 314 back to the SIM 202. The field "Ack value" includes at least one boolean expression (True/False). Error codes or reasons for the rejection up to alternative verifications, which could be delivered instead of the requested verification, are also possible in alternative embodiments.

The message "ack" could be binary coded and/or compressed in accordance with an embodiment for minimizing the bandwidth.

FIG. 12 shows the "certificate" message 110, which in accordance with an embodiment includes the following fields:

### - Message header 1202:

The Message header 1202 includes e.g. addressee, sender, message type (in this case the message type "certificate") and optionally the "Message ID". The "Message ID" is identical with the "certificate_request" message 108 and is included only in case there was a "Message ID" in the "certificate_request" message 108.

### - Random number sequence (RAND) 1204:

The random number sequence 1204 denotes the random number sequence, which has been transmitted in the "certificate_request" message 108. It is provided to achieve a unique assignment between the "certificate_request" message 108 and the "certificate" message 110. Since the entire message 110 is signed ("Message Auth" 1212), the random number sequence 1204 serves for avoiding the sending back a previously intercepted "certificate" message 110 again as a response to the current "certificate_request" message 108 at a later point in time. The random number sequence thus ensures the timeliness of the response. The security of the method may be increased by strong asymmetric encryption of the random number sequence 1204. In this case, the random number sequence 1204 will be encrypted using the public key of the verifier 304 (for the case that there already exists a business relationship to the verifier 304) or using the public key of the authenticating entity (e.g. of a mobile radio network operator or provider). In case this random number sequence is then transmitted in an unencrypted manner or encrypted using the public key of the verification requester 306, it is ensured that the verifier 304 is in the possession of the corresponding secret key which substantially increases the strength of the authentication of the verifier 304.

### - Date & time 1206:

This message field includes the date and the corresponding time in the SIM 202 that is the basis for the calculation of the verification. This could be the date and time of the terminal device or the values that have been transmitted in the "certificate_request" message 108.

### - Verification type 1208:

This message field is optional and includes the type of the verification that has been requested. This field, if present, corresponds to the field of the corresponding "certificate_request" message 108. One effect of the repeating of the type of the verification consists in that it would be ensured that no transmission error has occurred during the transmission of the verification request and the response really includes the requested verification and not erroneously an incorrectly interpreted verification. It is to be noted that in case of a transmission error the signature would not match and the evaluation in the SIM 202 can be trusted.

### - Verification 1210:

This field includes the actual verification that has been requested. In case it has been requested as to whether the verifier is at least 18 years old, this, as regards contents, this field includes the response "Verifier is older than 18 years". This could also be carried out in the X.509 standard or may include another predetermined or predefined data structure.

### - "Message-Auth" 1212:

This field includes the digital signatureof the message by the verifier 304. This field ensures the integrity of the message 110. In case a field of the message is changed, the "Message-Auth" field 1212 would no longer match to the rest of the message 110 and the processing would result in an error case. The quoted verification can in this case not be accepted.

The message "certificate" 110 could be binary coded and/or compressed in accordance with an embodiment for minimizing the bandwidth.

The message "certificate" 110 may in accordance with further embodiments include more or less fields than those that are listed in FIG. 12 as an example.

The messages in the FIG. 9 to FIG. 12 represent embodiments, which the skilled person could change in a suitable manner or could adapt for a specific application case. By way of example, the order of the message fields may be varied, as long as it is known to all three participants. Additional fields for further optimization are also possible.

Instead of the response message 110 generated in the SIM card 202, also a stored pregenerated verification message could be sent back as response. The use of this would consist in a less complex processing in the SIM card 202 or the secure storage without SIM card 202. It would be affecting that only pregenerated verification message could be transmitted and that these could not be generated dynamically. In particular in the not rarely occurring age verification, however, a dynamic generation may be helpful. Furthermore, the system would in this case rather susceptible to the replay attacks mentioned under item 7. above. This holds true in particular in case the information required for the verification is transmitted via a medium which is considered as being insecure (such as e.g. the Internet).

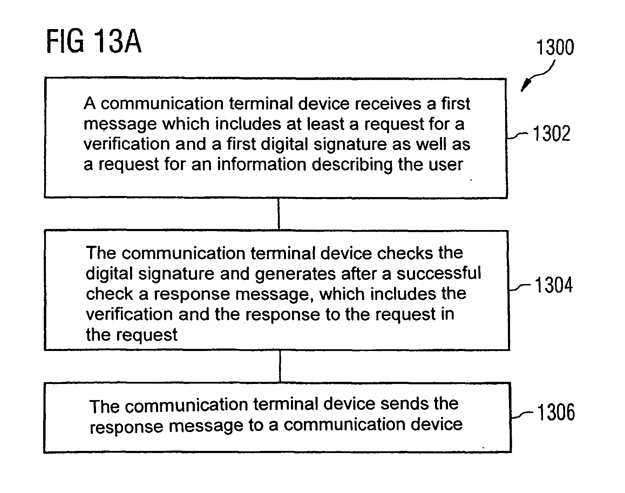

FIG. 13A shows a method 1300 for a communication terminal device 102 in accordance with an embodiment for effecting a digital verification.

In 1302, a communication terminal device 102 receives a first message 108 which includes at least a request for a verification and a first digital signature as well as a request for an information describing the user.

The message 108 may in accordance with an embodiment in addition to the request and the digital signature include further information such as e.g. the information as shown in FIG. 9. This information may include e.g. a random number sequence 904, date and time 906, the verification type 908, verification parameter 910 and information 912, 914 relating to a digital signature such as e.g. in accordance with the structure of the X.509 standard (see FIG. 14) or in accordance with an otherwise predefined structure. The digital signature may, as already outlined in the description above, e.g. include a hash value being calculated over the message in accordance with a hash function.

The personal information about the user may be e.g. data, which authorize a person for a specific action, e.g. an age verification.

The communication terminal device 102 may in accordance with an embodiment be a mobile communication terminal device such as e.g. a mobile radio terminal device, a personal digital assistant (PDA), a portable computer or another portable device having digital communication capabilites.

The receiving of the message 108 may be carried out in accordance with an embodiment via an interface 210 of a near-field communication standard such as e.g. Bluetooth; a standard of a wireless communication system such as e.g. IEEE 802.11, WiMax; an optical data interface 112 such as e.g. IrDA; or by means of an optical scanner such as e.g. a barcode reader; or via an interface of another wireless standard. In the case of an optical scanner, e.g. a barcode may be read in from a display 204 (see FIG. 2) of the communication device 206.

In 1304, the communication terminal device 102 checks the digital signature und generates after a successful check a response message 110, which includes the verification and the response to the request in the request. This may be carried out by an application 124 in accordance with an embodiment, which is stored in a data memory of the communication terminal device 102 and which is executed by a processor in the communication terminal device 102.

The communication terminal device 102 inserts in accordance with an embodiment a second digital signature into the response message 110, wherein the second digital signature is calculated e.g. over the fields 1202 to 1210 of the response message 110.

The communication terminal device 102 may in accordance with an embodiment additionally check the authenticity of the user 304, by e.g. prompting the user 304 to input his or her PIN. However, also other method such as e.g. biometric methods, may be used for authentication. The process for generating the verification is in accordance with an embodiment only continued in case that the authenticity of the user has successfully been determined.

Furthermore, in accordance with an embodiment of the method, the user may be asked for his agreement with the generation and transmission of the response message 110 including the verification and the response to the request for the information describing the user, interactively via the man machine interface of the communication terminal device 102.

In the case of a mobile communication terminal device that communicates in accordance with a mobile radio standard, the application 124 may also be stored on a SIM card 202.

In 1306, the communication terminal device 102 sends the response message 110 e.g. to the communication device 106.

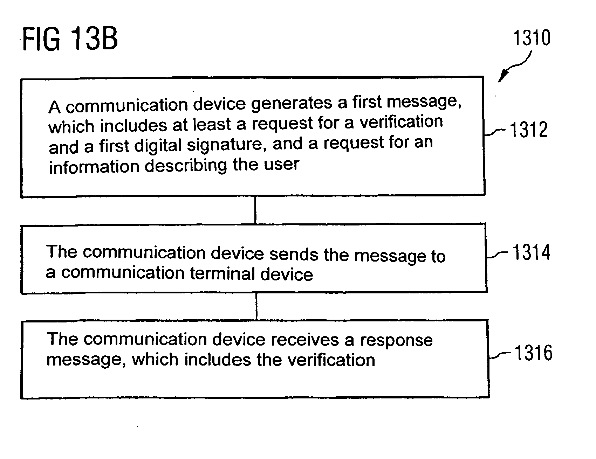

FIG. 13B shows a method 1310 for a communication device 106 in accordance with an embodiment for effecting a digital verification.

In 1312, a communication device 106 in accordance with an embodiment generates a first message 108, which includes at least a request for a verification und a first digital signature, and a request for an information describing the user. The message 108 may in accordance with an embodiment in addition to the request and the digital signature include further information such as e.g. the information shown in FIG. 9. This information may include a random number sequence 904, data and time 906, the verification type 908 and the verification parameters 910 with respect to the requested verification, and information 912, 914 with respect to a digital signature such as e.g. in accordance with with structure of the X.509 standard (see FIG. 14) or in accordance with an otherwise predefined structure. The digital signature may, as already outlined in the description above, e.g. be a hash value calculated over the message in accordance with a hash function.

The personal information may e.g. be data which authorize a person for a specific action such as e.g. an age verification.

In 1314, the communication device 106 sends the message 108 to a communication terminal device 102. The communication device 106 may in accordance with an embodiment e.g. be a mobile communication device such as e.g. a mobile radio terminal device (e.g. a mobile radio telephone) 218, a PDA, a portable computer or also a digital music player or another portable electronic device having digital communication capabilities, in which the functions required for executing the method are implemented, e.g. by means of the application 124.

The sending of the message 108 may be carried out in accordance with an embodiment via an interface 210 of a near-field communication standard such as e.g. Bluetooth; of a standard of a wireless communication systemsuch as e.g. IEEE 802.11, WiMax; of an optical data interface 112 such as e.g. IrDA; or via an optical scanner such as e.g. a barcode reader or via a interface of another wireless standard. In the case of an optical scanner, e.g. a barcode may be read-in from a display 204 (see FIG. 2) of the communication device 206.

In 1306, the communication device 106 receives a response message 110, which includes the verification (e.g. including a second digital certificate) including an answer to the question in the request, and checks the second digital certificate and/or the second digital signature such that the communication device can ensure that it obtains an authentic response to its question of the request.

Due to the digital verifications in accordance with embodiments, e.g. the following effects can be achieved compared with the physical identity card:

- Digital verifications are possible without any problems over large distances. Only this makes verifications for digital services such as Internet for a or Video-on-Demand possible.

- The verifications are easy to automize and can operate without human interoperation, which may be important in applications such as e.g. cigarette automats or video renting automats.

- The security of digital verifications is significantly higher compared with conventional methods due to the consequent usage of strong cryptography.

- An update of the data and of the security relevant components such as e.g. cryptographic keys are possible in a cheap way and over large distances using the communication terminal device 102. Thus, the security (frequent change of the security context) and the timeliness of the data may be ensured without generating new verifications and without withdrawing old ones.

- Due to the authentication of the verifier 304 at the application 124 to be executed, the verifications are more difficult to be assigned to other persons and are protected from illegitimate using of third persons.

- In an embodiment, a common authentication is carried out for all verifications such that the verifier 304 does no longer memorize a lot of different passwords and PINs.

- Third persons cannot see the data required for the verification. The verifications include only the information to be verified and no further information in addition to this. This, e.g. anonymous age verifications are possible without any problems.

- Digital verifications are not subject to any wear. They can easier be transferred to other devices.

- By using a communication terminal device 102 as the carrier of the verifications, a digital data transmission between customer data system and verifier 304 is automatically implemented and does not lead to additional costs. There is also the possibility to store not only one customer number but immediately a cryptographic customer key, which can be used for the communication between the both parties for an encryption.

- The digital verifications may also include biometric data such as e.g. an image or photo of the subscriber like conventional identity cards or customer cards. Also machine readable biometric data (face pattern, finger print) are thus possible. These increase the security level and can also be used in a fully automated applications.

- For the generation of digital verifications, no material is used.

Furthermore, the effects of the method for effecting digital verifications should be mentioned:

- It is possible to effect all verifications using a central device that has proved as being a permanent companion of the verifier 304 in daily life.

- All participating entities (requesting entity 306, mobile radio subscriber 304, application 124, and data provider) can authenticate each other using digital certificates without carrying out permanent or very frequent communication between the entities due to the used asymmetric cryptography. Merely the public keys should be distributed at an initial point in time. By regularly changing the keys, the security level can be increased und individual entities may e.g. be excluded after the expiry of the accounting time period.

- The verifier 304 has the final control over the information that he or she wants to verify about himself or herself and thus divulge.

- It is possible to generate dynamic verifications. Thus, a subscriber can e.g. at his 18^{th} birthday immediately verify his current age without the need of changing of any certificate, and without divulging his birthday.

- By inserting or binding in the random number sequence (e.g. in a Challenge-Response method), a robust implementation against replay attacks is provided.

- By inserting or binding the date and/or time manipulations by changing the internal clock are avoided and a trusted system time which could only be implemented by elaborate communication is not required.

- By using optional error messages all participants may be informed about reasons for the failure of a verification.

Three examples will be described in the following.

Anonymous age verification during buying of cigarettes at a cigarette automat

Prerequisites:

A cigarette automat manufacturer takes part in a verification program via mobile radio devices, which is offered by a consortium of national mobile radio network operators or providers.

The public key of the mobile radio network operators or providers is stored in the automats of the manufacturer.

Furthermore, he manufacturer provides its automats with a Bluetooth interface for wireless communication with mobile radio terminal devices and with an internal clock.

A 17 years old mobile radio subscriber 304 uses an automat of the company mentioned above for buying cigarettes. According to German law, it is only allowed to enable the buying of cigarettes for teenagers that are at least 16 years old. For this reason, the automat, after having received the money, sends out an age verification request via Bluetooth. The spatial proximity to the automat caused by principle may lead to an abandonment of an authentication of the automat toward the verification effecting application 124. After the confirmation of the age verification "greater than or equal to 16" by the subscriber and the input of the PIN for the SIM card 202, the application 124 in the SIM card 202 calculates using the date of birth of the subscriber stored by the mobile radio network operator or provider and the current date the current age of the subscriber and compares it with the condition required in the verification. The random number sequence delivered by the automat together with the request, the current date provided by the internal clock included in the mobile radio terminal device and the actual verification "Subscriber is 16 years old or older" will be assembled to a message 110, is digitally signed using the secret key located in the SIM card 202 and is sent back to the automat. The automat checks using the public key of the one or more mobile radio network operators or providers stored in the automat the digital signature of the response message 110 and delivers, with demonstrably unchanged message 110, the desired cigarettes, if the received random number sequence corresponds to the previously sent random number sequence, and if the received date and/or time corresponds to the date and/or time provided by the internal clock of the automat within a preset tolerance.

**Internet fora for girls**

Prerequisites:

A provider of a communication platform in the Internet for girls at the age of between 12 years and 15 years takes part in a verification program via mobile radio terminal devices 218, which is offered by a consortium of national mobile radio network operators or providers.

The public key of the national mobile radio network operators or providers is stored in the system of the national mobile radio network operators or providers.

A key generated for the platform provider by the national mobile radio network operators or providers is digitally delivered to the platform provider and is also stored in the system.

A 13-year old female mobile radio subscriber 304 tries to get access to the platform of the provider. During the application at the portal site, the subscribers 304 are prompted to provide a verification about age and gender. A plurality of methods may be selected.

The female subscriber 304 selects the option to read-in a Semacode (two-dimensional barcode) using the camera that is included in her mobile radio terminal device 212. The code is decoded in and by an application 124 that is included in her mobile radio terminal device 212 and the so decoded data is forwarded to the application 124 arranged on the SIM card 202. Due to the spatial distance to the platform provider caused by principle, also the name of the provider and the current date with time 905 are included in the request 108. The entire message 108 is digitally signed with the secret key of the platform provider. After the confirmation of the verification "female AND age older than or equal to 12 AND age younger than 16" by the female subscriber 304, the digital signature 914 of the platform provider is checked. After having checked the signature 914, the female subscriber 304 is asked to authenticate herself by means of the input of the PIN for the SIM card 202. Using the date of birth of the female subscriber 304 stored on the SIM card 202 of the mobile radio network operators or providers and the current date provided by the internal clock, the current age of the female subscriber 304 is calculated and compared with the condition required in the verification. Also using the application 124, the gender of the female subscriber 304, that is stored on the SIM card 202 of the mobile radio provider, is compared with the condition required in the verification. The random number sequence 904 delivered together with the request from the provider, the current date provided by the internal clock of the mobile radio terminal device 218, and the actual verification "subscriber is female and has is of an age between 12 years and 15 years" is assembled together to one message 110, is digitally signed with the secret key of the mobile radio network operator or provider located in the SIM card 202 and is displayed at the display 204 of the mobile radio terminal device 218. After the input of the message via the keyboard 206 (a transmission of the data via Bluetooth would also be possible), the platform provider checks the digital signature 1212 of the response message 110 using the public key of the mobile radio network operator or provider stored in the system, and allows in case of demonstrably unchanged message 110 the anonymous access to the portal, if the random number sequence 1204 corresponds to the previously sent random number sequence 904, and if the date 1206 and/or time corresponds to the date and/or time provided by the internal clock of the system within a preset tolerance (if applicable, a conversion to UTC (Coordinated Universal Time) is provided). In an alternative embodiment, it may be provided for the case that a date and/or time has been sent together with the request, to compare the date and/or time with the internal clock and that is is only continued in processing in case they match within predetermined limits. The matchingcould be carried out after the tranmission of the certificate (if there is also transmitted the date and/or time), however, in this way it would be possible to approach to the date of birth by a lot of requests.

**Digital video store card**

Prerequisites:

A video store provider takes part in a verification program via mobile radio terminal devices 218, which is offered by a consortium of national mobile radio network operators or providers.

The public key of the national mobile radio network operators or providers is stored in the system of the national mobile radio network operators or providers.

Furthermore, the manufacturer provides his video store system with a Bluetooth interface 210 for wireless communication with mobile radio terminal devices 218 and an internal clock.

A 17-year old mobile radio subscriber 304 registers for the use of a video store. For this purpose, he provides his personal identity card in order to verify the data such as e.g. name, address and date of birth, stored in the customer data base. He takes part in the program "Electronic Video Store Card". Therefore, during the registration, a digital certificate including the customer number of the subscriber 304 is generated and stored in the application 124 for digital verifications on the SIM card 202. This can either be carried out via the mobile radio network operator or provider or after the authentication of the video store in direct communication with the application 124 for digital verifications. In accordance with German law, only adults beginning at the age of 18 years may be allowed to access to the adult region of a video store. If the subscriber 304 wants to borrow a movie, the cashier system of the video store sends out a customer request 108 via Bluetooth. The request 108 again includes a random number sequence 904. Due to the spatial proximity to the cashier system caused by principle, an authentication of the video store toward the verification effecting application 124 is abandoned. It follows the confirmation of the customer verification by the subscriber 304 and the input of the PIN for the SIM card 202. The random number sequence 904 delivered together with the request from the system and the stored customer number are assembled, digitally signed with the secret key of the mobile radio network operator or provider located in the SIM card 202, and is sent back to the system. The system checks the digital signature 1212 of the response message 110 using the stored public key of the mobile radio network operator or provider, and, in case of a demonstrably unchanged message 110, retrieves the data record of the customer, if the random number sequence 1204 corresponds to the previously sent random number sequence 904. Also an age verification for the access to the adult region may be realized in this way. In addition, the video store offers renting automats, which are also accessible out of the normal business hours. The authentication of the customer is carried out, as described in this example, without the participation of a personnel. The offer of movies takes into account the age of the customer included in the customer data record, and the movies borrowed at the automat are noted and stored in the customer data record.

FIG. 14 shows the exemplary structure of an ITU-T X.509 certificate.

FIG. 15 shows a diagram which relates to digital signatures. On the one hand, on the side of the receiver 1526, using a hash function 1520, a hash value 1522 is calculated from the original information 1502 in an unencrypted manner. On the other hand, on the side of the sender 1524, using a hash function 1504, a hash value 1406 is calculated from the original information 1502, which is, however, encrypted in 1508 using the secret key 1516. This generates the digital signature 1510, which is again decrypted in 1512 on the side of the receiver using the public key 1518. The thus generated decrypted digital signature 1514 is compared with the unencrypted hash value 1522.

Another field of application of various embodiments may be seen in a digital personal identity card or passport, in which the verification effecting functionality, as described above, is implemented.

According to one embodiment, a communication terminal device for providing a certificate is provided, the communication terminal device comprising an application, configured to receive a first message from a requesting communication device, wherein the first message comprises a request for a verification and a request for information describing the user wherein the application is further configured to generate a response message for the requesting communication device, wherein the response message comprises the verification comprising a response to the request, wherein the verification is digitally signed using a secret key of a trusted entity.

In this embodiment, the first message may comprise a first digital signature; and the application may be further configured to check the first digital signature and to process the request in case of a successful check.

Further, in this embodiment, the first message may comprise at least one certificate.

Further, in this embodiment, the communication terminal device may be a mobile communication terminal device.

Further, in this embodiment, the mobile communication terminal device may be a mobile terminal device.

Further, in this embodiment, the communication terminal device may further comprise a data memory, in which the application is stored; and a processor for executing the application.

Further, in this embodiment, the communication terminal device may further comprise a SIM card comprising a SIM card memory wherein the application is stored in the SIM card memory.

Further, in this embodiment, the application may be configured to be updated via a secure transmission channel.

Further, in this embodiment, the secure transmission channel for updating the application may be a wireline transmission channel or a wireless transmission channel.

Further, in this embodiment, the secure transmission channel for updating the application may be a telecommunication transmission channel.

Further, in this embodiment, the communication terminal device may further comprise an interface configured to transmit messages to the communication device and to receive messages from the communication device.

Further, in this embodiment, the interface may be configured as at least one of the following types of interfaces:
a data interface of a radio communication standard;
an optical data interface; or
an Internet interface.

Further, in this embodiment, the first message and/or the response message may further comprise a random number sequence and/or the date and/or time of the generation of the first message or the response message.

Further, in this embodiment, the communication terminal device may further comprise an encryption circuit configured to encrypt the random number sequence; wherein the communication terminal device is configured to insert the encrypted random number sequence into the response message.

Further, in this embodiment, the application may be further configured to check the authenticity of the user.

Further, in this embodiment, the application may be further configured to check the authenticity of the user in the application by checking a characteristic input via a user interface.

Further, in this embodiment, the communication terminal device may further comprise a confirmation requesting circuit configured to request a confirmation from the user of the communication terminal device that the communication terminal device generates the response message comprising the response to the request in the request message.

Further, in this embodiment, the verification may comprise a digital certificate.

In one embodiment, a communication device for providing a message is provided, the communication device comprising a application configured to generate a first message comprising a request for a verification and a request for an information describing the user wherein the communication device is configured to send the first message to an communication terminal device and wherein the communication device is further configured to receive a second message from the communication terminal device, wherein the second message comprises a verification, which has been generated on the basis of the request, wherein the verification is digitally signed using a secret key of a trusted entity.

In this embodiment, the first message may comprise a first digital signature.

Further, in this embodiment, the first message may comprise at least one certificate.

Further, in this embodiment, the verification may comprise a digital certificate wherein the communication device further comprises an evaluation circuit to evaluate at least the digital certificate comprised in the second message.

Further, in this embodiment, the communication device may be configured to insert a random number sequence into the first message.

Further, in this embodiment, the communication device may be configured to take into account the random number sequence during the evaluation of the response to the request after the receipt of the second message.

Further, in this embodiment, the communication device may be configured to insert the date and/or time into the second message.

Further, in this embodiment, the communication device may be configured to insert the type of the verification into the first message.

Further, in this embodiment, the communication device may further comprise an interface configured to transmit messages to the communication terminal device and to receive messages from the communication terminal device.

Further, in this embodiment, the interface may be configured as at least one of the following types of interfaces:
a data interface of a radio communication standard;
an optical data interface; or
an Internet interface.

In one embodiment, an electronic card is provided, comprising circuits configured to process electronic signals and information, wherein the information provides at least an application configured to receive a first message from a communication device, wherein the first message comprises a request for a verification and a request for information describing the user wherein the application is further configured to generate a response message for the requesting communication device, wherein the response message comprises the verification comprising a response to the request, wherein the verification is digitally signed using a secret key of a trusted entity.

In this embodiment, the first message may comprise a first digital signature wherein the application is further configured to check the first digital signature and to process the request in case of a successful check.

Further, in this embodiment, the electronic card may be a SIM card of a mobile radio terminal device.

Further, in this embodiment, the electronic card may be configured to check the authenticity of the user.

Further, in this embodiment, the electronic card may further comprise a confirmation requesting circuit configured to request a confirmation from the user of the electronic card that the communication terminal device generates the response message comprising the response to the request in the request message.

In one embodiment, a method for providing a certificate is provided, comprising a communication terminal device receiving a first message from a communication device, wherein the first message comprises a request for a verification and a request for information describing the user; the communication terminal device generating a response message comprising the response to the request, wherein the response comprises a verification, wherein the verification is digitally signed using a secret key of a trusted entity; and the communication terminal device sending the response message to a communication device.

In this embodiment, the first message may comprise a first digital signature and the first digital signature may be checked and the request may be processed in case of a successful check.

Further, in this embodiment, the first message may comprise at least a certificate.

Further, in this embodiment, the communication terminal device may be a mobile communication terminal device.

Further, in this embodiment, the communication terminal device may be a mobile radio terminal device.

Further, in this embodiment, at least the check of the first digital signature and the generation of the second certificate may be carried out by an application stored on a SIM card.

Further, in this embodiment, the communication terminal device may further check the authenticity of the user.

Further, in this embodiment, the communication terminal device may check the authenticity of the user using a characteristic input via a user interface.

Further, in this embodiment, the communication terminal device may request a confirmation from a user to confirm the generation and subsequent transmission of the response message comprising the response to the request for the information describing the user.

Further, in this embodiment, the communication terminal device may send or receive the messages via one of the following types of interfaces:
a data interface of a radio communication standard;
an optical data interface; or
an Internet interface.

Further, in this embodiment, the communication terminal device may further insert into the response message a random number sequence and/or the date and/or the time of the generation of the response message.

In one embodiment, a method for providing a certificate is provided, the method comprising a communication device generating a first message comprising a request for a verification and a request for information describing the user; the communication device sending the first message to a communication terminal device;the communication device receiving a response message comprising the response to the request, wherein the response comprises a verification, wherein the verification is digitally signed using a secret key of a trusted entity.

In this embodiment, the first message may comprise a first digital signature.

Further, in this embodiment, the first message may comprise at least a certificate.

Further, in this embodiment, the communication device may checks the digital signature of the digital certificate.

Further, in this embodiment, the communication device may insert the type of the requested verification into the response message.

Further, in this embodiment, the communication device may further insert a random number sequence and/or the date and/or the time of the generation of the first message into the first message.

Further, in this embodiment, the communication device may send or receive the messages via at least one of the following types of interfaces:
a data interface of a radio communication standard;
an optical data interface; or
an Internet interface.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. An electronic card, comprising:
circuits configured to process electronic signals and information, wherein the information provides at least an application configured to receive a first message from a requesting communication device, wherein the first message comprises a request for a verification of information about personal characteristics of a user wherein the application is configured to authenticate the user; and
wherein the application is further configured to verify the personal characteristics against stored values to thereby generate a result of the verification and, for the case that the result of the verification of the personal characteristics is positive, to generate a response message for the requesting communication device, wherein the response message comprises the result, wherein the result is digitally signed using a secret key of a trusted entity, and for the case that the result is negative, to either not generate a response message or to generate a negative response message including a response that the characteristic to be verified is not fulfilled.

2. The electronic card of claim 1,
wherein the first message comprises a first digital signature; and
wherein the application is further configured to check the first digital signature and to process the request in case of a successful check.

3. The electronic card of claim 1 or 2,
wherein the first message comprises at least one certificate.

4. The electronic card of any one of the claims 1 to 3, being a SIM card comprising a SIM card memory wherein the application is stored in the SIM card memory.

5. The electronic card of any one of the claims 1 to 4,
wherein the application is configured to be updated via a secure transmission channel.

6. The electronic card of any one of the claims 1 to 5,
wherein the first message and/or the response message further comprises or comprise a random number sequence and/or the date and/or time of the generation of the first message or the response message.

7. The electronic card of claim 6, wherein the application is further configured to encrypt the random number sequence and is configured to insert the encrypted random number sequence into the response message.

8. The electronic card of any one of the claims 1 to 7, wherein the application is further configured to request a confirmation from the user that the electronic card generates the response message comprising the response to the request in the request message.

9. The electronic card of any one of the claims 1 to 8,
wherein the verification comprises a digital certificate.
